# EUROPÄISCHE PATENTSCHRIFT

(11) **EP 1 561 098 B1**
(45) Veröffentlichungstag und Bekanntmachung des Hinweises auf die Patenterteilung: **25.04.2007**
(21) Anmeldenummer: 03779901.2
(22) Anmeldetag: 12.11.2003
(51) Int. Cl.: G01N 23/04, B07C 5/34

(54) **VORRICHTUNG ZUR UNTERSUCHUNG VON GEFÜLLTEN BEHÄLTERN MITTELS SCHRÄG EINGESTRAHLTER RÖNTGENSTRAHLEN**
DEVICE FOR EXAMINING FILLED CONTAINERS USING OBLIQUELY EMITTED X-RAYS
SYSTEME POUR INSPECTER DES CONTENANTS PLEINS A L'AIDE DE RAYONS X A INCIDENCE OBLIQUE

(30) Priorität: 12.11.2002 DE 20217559 U
(43) Veröffentlichungstag der Anmeldung: 10.08.2005
(73) Patentinhaber: HEUFT SYSTEMTECHNIK GMBH, 56659 Burgbrohl (DE)
(72) Erfinder: HEUFT, Bernhard, 56659 Burgbrohl (DE); POLSTER, Wolfgang, 56626 Andernach (DE)
(74) Vertreter: Gritschneder, Martin
(86) Internationale Anmeldenummer: PCT/EP2003/012632
(87) Internationale Veröffentlichungsnummer: WO 2004/044567

(56) Entgegenhaltungen:
- WO-A-01/44791
- WO-A-01/96842
- WO-A-93/06469
- US-A- 3 917 947
- US-A- 4 025 202

## Beschreibung

Die Erfindung betrifft eine Vorrichtung zur Untersuchung von gefüllten Behältern auf Fremdkörper, wie Glassplitter, mit einer Transporteinrichtung zum Transport der Behälter einzeln aufeinander folgend in einer Reihe auf einer Transportebene, mit einer ersten Röntgenstrahlquelle zur Aussendung eines Röntgenstrahls in einer vorgegebenen Richtung und mit einer Einrichtung zur Erfassung der Röntgenstrahlen nach dem Durchgang durch die Behälter, wobei die Richtung, in der die Röntgenstrahlen von der Röntgenstrahlenquelle ausgesandt werden, zwischen 10° und 60° zur Transportebene geneigt ist.

Die Kontrolle von Gütern, die in Behältern abgefüllt sind, zum Beispiel Fruchtsäfte in Getränkeflaschen, mittels Röntgenstrahlen, ist in der Lebensmittelindustrie ein bekanntes Verfahren. Schwierigkeiten ergeben sich bei der Kontrolle auf Fremdkörper, die eine höhere Dichte als die abgefüllten Güter haben und daher in den Behältern nach unten sinken. Bei Behältern mit nach oben gewölbtem Boden, wie es bei vielen Getränkeflaschen der Fall ist, gleiten die Fremdkörper auf der Wölbung des Behälterbodens an den inneren Behälterrand. Dort sind sie mittels Röntgenstrahlen schwer zu erkennen, da die Röntgenstrahlen nicht nur die senkrechte Behälterwand, sondern auch den Behälterboden durchdringen müssen, und dabei wegen der Wölbung des Behälterbodens in einem Winkel von zum Beispiel 10° zur gewölbten Fläche des Behälterbodens gerichtet sind und daher eine sehr lange Strecke innerhalb des Behältermaterials verlaufen. Eine zusätzliche Schwächung der Röntgenstrahlen durch eventuell vorhandene Fremdkörper wirkt sich dadurch nur relativ wenig aus und ist häufig nicht mehr feststellbar. Andererseits täuschen Unebenheiten der Oberfläche des Behälterbodens leicht einen Fremdkörper vor.

Aus WO 93/06469 ist es zur Lösung dieses Problems bekannt, Behälter mittels zweier Röntgenquellen zu untersuchen, wobei beide Röntgenstrahlenquellen auf gleicher Höhe bezüglich einer Transportebene, und zwar oberhalb der Transportebene, angeordnet sind.

Da die Untersuchungsvorrichtung symmetrisch zur Mittellinie der Transporteinrichtung aufgebaut ist und die symmetrischen Behälter genau in dieser Symmetrieebene transportiert werden, liefert die Vorrichtung spiegelsymmetrische Röntgenaufnahmen.

Die beiden Aufnahmen werden voneinander subtrahiert, was normalerweise ein Leeres Bild produziert. Befindet sich jedoch in dem untersuchten Behälter ein Fremdkörper, so sind die beiden Röntgenaufnahmen nicht mehr symmetrisch, es sei denn, der Fremdkörper liegt genau in der Symmetrieebene.

Aus EP-A-0 795 746 ist es zur Lösung des Problems bekannt, die Behälter mittels zwei Röntgenstrahlen zu untersuchen, von denen der eine 45° in Transportrichtung und der andere 45° entgegen der Transportrichtung zeigt, so dass sie zueinander rechtwinklig sind.

Aus EP-A-0 961 114 ist es bekannt, die Behälter für diese Untersuchung auf den Kopf zu stellen, so dass eventuell vorhandene Fremdkörper nach unten zum Verschluss sinken und dabei mittels Röntgenstrahlen sicher erkannt werden können.

Aus WO 01/44791 ist es bekannt, die Behälter um etwa 80° zur Seite zu neigen und dann mittels eines vertikal gerichteten Röntgenstrahls auf Fremdkörper zu untersuchen.

Der Erfindung, wie sie im Anspruch 1 angegeben ist, liegt die Aufgabe zugrunde, die Zuverlässigkeit der Erkennung von Fremdkörpern in gefüllten Behältern zu verbessern.

Eine geeignete Röntgenstrahlenquelle erzeugt beispielsweise einen Röntgenstrahl mit 50 bis 100 keV, insbesondere mit 60 keV.

Gewölbte Behälterböden haben am Rand im Allgemeinen eine maximale Neigung zwischen etwa 10° und 60°. Die Röntgenstrahlenquelle wird so positioniert, dass der Strahlenverlauf an der Stelle der maximalen Neigung des Behälterbodens - das ist im Allgemeinen am Rand des Behälterbodens - etwa tangential zu der Wölbung des Behälterbodens ist. Dies lässt sich sowohl durch eine Anordnung der Röntgenstrahlenquelle über der Transportebene als auch durch eine solche unter der Transportebene erreichen.

Ist die Röntgenstrahlenquelle über der Transportebene angeordnet, so verläuft der obere Teil des Röntgenstrahls in dem von der Röntgenstrahlenquelle abgewandten Bereich des Behälterbodens etwa tangential zur Wölbung des Behälterbodens. Der Röntgenstrahl durchdringt dadurch das Material des Behälters nur auf der Vorderseite und auf der Rückseite der Wand, verläuft jedoch nicht eine längere Wegstrecke innerhalb des Behälterbodens. Bei einer Neigung von zum Beispiel 30° verlängert sich die Strecke innerhalb der senkrecht stehenden Behälterwand nur um etwa 15%. Der Kontrast von Intensitätsunterschieden, der durch Fremdkörper verursacht wird, verringert sich dadurch nur unwesentlich.

In dem der Röntgenstrahlenquelle zugewandten Bereich des inneren Randes des Behälterbodens ergeben sich ähnlich günstige Verhältnisse. Steigt hier der Behälterboden mit einem Winkel von zum Beispiel 30° an, so verläuft der Röntgenstrahl dann unter einem Winkel von 60° zum Behälterboden, so dass auch hier die Wegstrecke im Vergleich zu einem rechtwinkligen Einfall nur um etwa 15% verlängert ist.

Der Röntgenstrahl kann auch von unten unter einem Winkel von zum Beispiel 30° zur Transportebene gegen den Behälterboden gerichtet sein. In dem der Röntgenstrahlenquelle zugewandten Bereich verläuft der Röntgenstrahl dann etwa tangential zur Wölbung des Behälterbodens, während er in dem von der Röntgenquelle abgewandten Bereich des inneren Randes des Behälterbodens dann in dem gewählten Fall unter einem Winkel von etwa 60° zum Behälterboden verläuft.

Vorzugsweise sind die Röntgenstrahlen in jedem Fall etwa rechtwinklig zur Transportrichtung ausgerichtet.

Die Behälter werden mittels zweier Röntgenstrahlen untersucht, von denen der eine von oben und der andere von unten gegen den Behälterboden gerichtet ist. Vorzugsweise sind beide Röntgenstrahlenquellen auf der selben Seite der Transporteinrichtung angeordnet. Die Winkel, unter denen die Röntgenstrahlen auf den Behälterboden gerichtet sind, können gleich groß oder unterschiedlich sein. Vorzugsweise betragen sie etwa 30°. Es ist auch möglich, noch weitere Röntgenstrahlenquellen einzusetzen, zum Beispiel eine dritte Röntgenstrahlenquelle, die einen Röntgenstrahl parallel zur Transportebene oder unter einem anderen Winkel als die erste und die zweite Röntgenstrahlenquelle auf den Behälterboden richtet. Der Winkel der Röntgenstrahlen zur Transportrichtung kann ebenfalls unterschiedlich sein.

Die Einrichtung zur Erfassung der Röntgenstrahlen ist auf der bezüglich der Transporteinrichtung der Röntgenstrahlenquelle gegenüberliegenden Seite angeordnet. Es kann sich bei dieser Einrichtung um eine Zeile oder ein zweidimensionales Feld von Röntgenstrahlendetektoren handeln. Bei den Röntgenstrahlendetektoren kann es sich um Fotodioden mit einem Szintillationskristall handeln. Vorzugsweise handelt es sich bei der Erfassungseinrichtung jedoch um einen Röntgenbildwandler oder Röntgenbildverstärker mit nachgeschalteter CCD-Kamera. Durch den Einsatz eines solchen Flächensensors wird die nötige Belichtungszeit auf ein Minimum herabgesetzt und so die Strahlenbelastung des Produkts und der Umwelt reduziert.

Jeder Röntgenstrahlenquelle ist eine Einrichtung zur Erfassung der Röntgenstrahlen und zur Auswertung der Informationen zugeordnet. Durch Vergleich der von den einzelnen Erfassungseinrichtungen gelieferten Information ist dabei eine dreidimensionale Positionsbestimmung der Fehler möglich, wodurch zwischen Fremdkörpern und Fehlern im Material der Behälterwand unterschieden werden kann.

Vorzugsweise werden die Bilder der zwei Röntgenstrahlen auf einem Flächensensor gekoppelt. Der Divergenzwinkel der Röntgenstrahlen und der Abstand der Röntgenstrahlenquellen von der Transporteinrichtung auf der einen Seite und der Abstand des Flächensensors von der Transporteinrichtung auf der anderen Seite, werden dabei so aufeinander abgestimmt, dass in der oberen Hälfte des Flächensensors das von dem von unten kommenden Röntgenstrahl erzeugte Bild erscheint, während in der unteren Hälfte des Flächensensors das von dem von oben kommenden Röntgenstrahl erzeugte Bild erscheint. Fehler, die in dem einen Bild auftauchen, können in dem jeweils anderen Bild gesucht und bestätigt werden.

Bei der Transporteinrichtung kann es sich um einen üblichen Gliederkettenförderer mit Kunststoffkettengliedern handeln. Falls die Kettenglieder auf dem Röntgenbild stören, so kann ein Riemen-Transporteur verwendet werden, bei dem die Behälter mittels zweier seitlich angreifender Riemen transportiert werden. Eine solche Transporteinrichtung ist aus EP-A-0 124 164 bekannt. Der Boden der Behälter wird dabei nicht abgestützt. Die Transportebene wird dabei durch die Behälterböden definiert. Vorzugsweise liegt sie horizontal. Insbesondere bei Verwendung eines Riementransporteurs kann sie jedoch auch geneigt sein.

Gegenstand der Erfindung ist ferner die Verwendung der vorausgehend beschriebenen Vorrichtung zur Untersuchung von gefüllten Behältern auf Fremdkörper, insbesondere von Glasflaschen mit gewölbtem Boden. Die Röntgenstrahlenquelle oder die Röntgenstrahlenquellen sind vorzugsweise so positioniert, dass der Strahlenverlauf an der Stelle der maximalen Neigung des Behälterbodens etwa tangential zu der Wölbung des Behälterbodens ist.

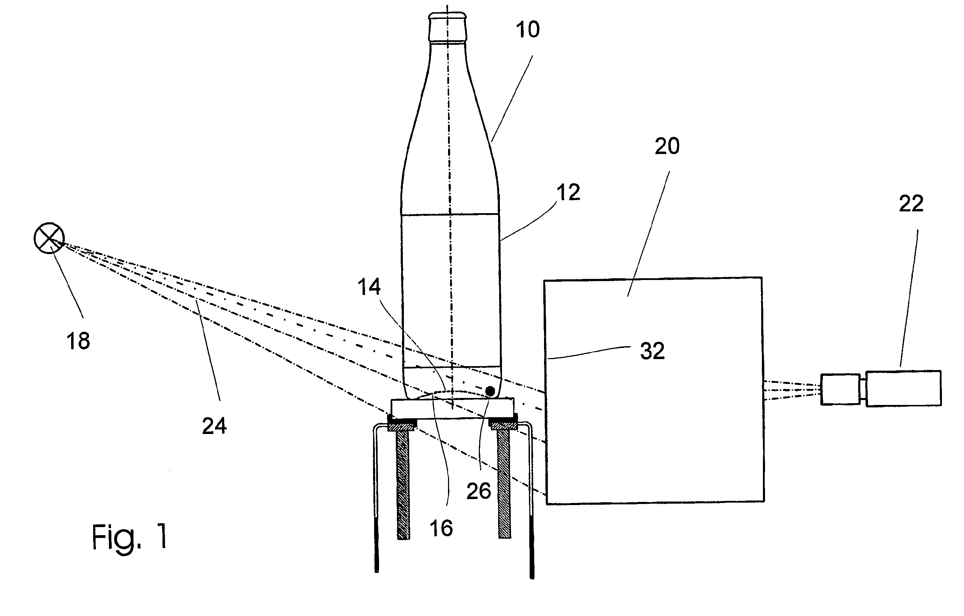

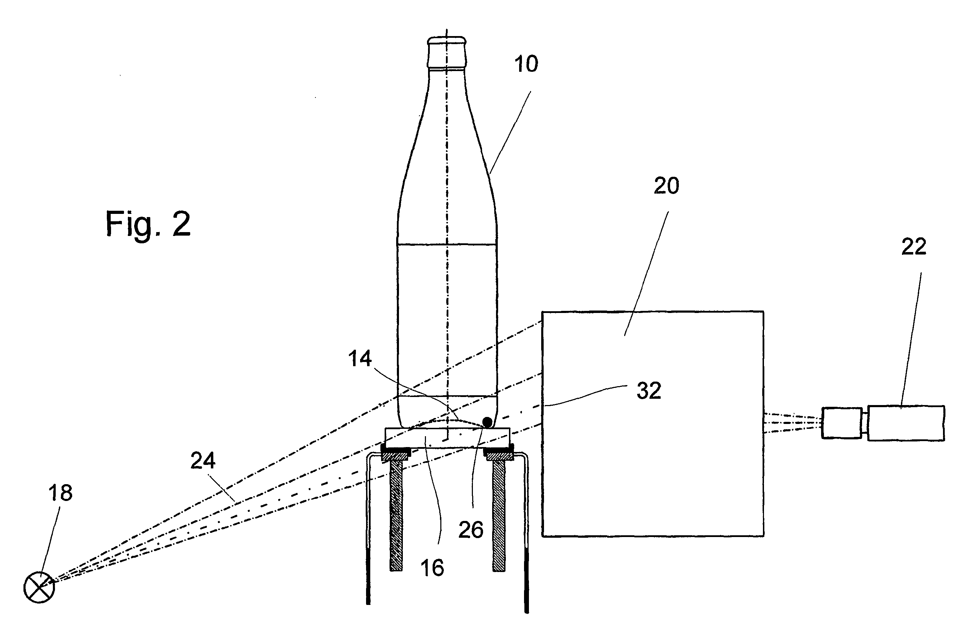

Ausführungsbeispiele der Erfindung werden nachfolgend anhand der Zeichnung erläutert, wobei die Figuren 1 und 2 Untersuchungsvorrichtungen mit einer einzigen Röntgenstrahlungsquelle zeigen, wie sie nicht Gegenstand der Erfindung sind. Es zeigen:
- Fig. 1: eine Untersuchungsvorrichtung, bei der der Röntgenstrahl unter einem Winkel von 30° von oben gegen die Transportebene gerichtet ist;
- Fig. 2: eine Untersuchungsvorrichtung, bei der der Röntgenstrahl von unten unter einem Winkel von 30° gegen die Transportebene gerichtet ist;
- Fig. 3: ein Ausführungsbeispiel mit zwei Röntgenstrahlen mit Blick in Transportrichtung und
- Fig. 4: das Ausführungsbeispiel von Fig. 3 in Seitenansicht.

Bei den Ausführungsbeispielen sind die Behälter jeweils Getränkeflaschen 10 aus Glas, die im unteren Bereich eine zylindrische Wand 12 und einen nach oben gewölbten Flaschenboden 14 haben. Die Flaschen 10 werden auf einer Transporteinrichtung 16 aufrecht stehend transportiert. Bei der Transporteinrichtung 16 handelt es sich um einen üblichen Gliederkettenförderer. Im Abstand neben der Transporteinrichtung 16 ist auf der einen Seite eine 60 keV-Röntgenstrahlenquelle 18 und auf der anderen Seite eine Einrichtung zur Erfassung der Röntgenstrahlen angeordnet. Diese Einrichtung ist ein Flächensensor in Form eines Röntgenbildwandlers 20. Das von dem Röntgenbildwandler 20 erzeugte Bild wird von einer CCD-Kamera 22 aufgezeichnet.

Die Oberseite der Transporteinrichtung 16 definiert eine Transportebene. Der Röntgenstrahl 24 ist bei dem Ausführungsbeispiel von Fig. 1 unter einem Winkel von 30° von oben gegen die Transportebene geneigt. Der Abstand der Röntgenstrahlenquelle 18 von der Transporteinrichtung 16 beträgt etwa 30 cm und der Röntgenstrahl 24 hat eine Divergenz von 15.°, so dass der gesamte Flaschenboden, der einen Durchmesser von etwa 7 cm hat, innerhalb des Röntgenstrahls 24 liegt. Der Röntgenbildwandler 20 ist in möglichst geringem Abstand neben der Transporteinrichtung 16 angeordnet und erfasst zumindest den Bereich des Röntgenstrahls 24, der den Flaschenboden 14 durchdrungen hat.

Bei dem dargestellten Ausführungsbeispiel von Fig. 1 befindet sich auf der von der Röntgenstrahlenquelle 18 abgewandten Seite des inneren Randes des Flaschenbodens 14 ein Fremdkörper 26, zum Beispiel ein Glassplitter. Der Fremdkörper 26 absorbiert oder streut die Röntgenstrahlen und ist auf dem Röntgenbildwandler 20 als dunkler Fleck 32 erkennbar. Wie man in Fig. 1 erkennt, durchdringen die Strahlen in der unmittelbaren Nachbarschaft der Strahlen, die auf den Fremdkörper 26 treffen, die Vorderseite und die Rückseite der Wand 12 der Flasche 10 unter einem Winkel von etwa 60°. Dies gilt auch für die unmittelbar darunter verlaufenden Strahlen, die etwa tangential zur Wölbung des Randes des Flaschenbodens 14 verlaufen. Die noch etwas tiefer liegenden Strahlen verlaufen dagegen eine relativ lange Strecke innerhalb des Flaschenbodens 14 und werden dadurch sehr stark geschwächt, wobei Unebenheiten in der Oberseite oder Unterseite des Flaschenbodens 14 sich sehr stark auswirken. Die Strahlen in der unmittelbaren Umgebung des Fremdkörpers 26 werden jedoch sehr gleichförmig geschwächt, so dass der Fremdkörper 26 durch einen deutlichen Helligkeitskontrast auf dem Röntgenbildwandler 20 erkennbar ist.

Bei dem Ausführungsbeispiel von Fig. 2 ist die Röntgenstrahlenquelle unterhalb der Transportebene angeordnet und ist der Röntgenstrahl 24 unter einem Winkel von 30° von unten gegen die Transportebene gerichtet. Der gleiche Fremdkörper 26 wie in Fig. 1 hebt sich auch hierbei deutlich von der Umgebung ab. Der Winkel, unter dem die Strahlen in der Umgebung des auf den Fremdkörper 26 treffenden Strahls gegen den Flaschenboden 14 gerichtet sind, ergibt sich zu 30° + der Neigung des Randes des Flaschenbodens 14, der typischerweise ebenfalls 30° beträgt. Eventuelle Unebenheiten der Materialstärke in der Flasche 10 wirken sich dadurch nur geringfügig aus. Bezüglich der Anordnung des Röntgenbildwandlers 20 und der CCD-Kamera 22 entspricht das Ausführungsbeispiel von Fig. 2 dem von Fig. 1.

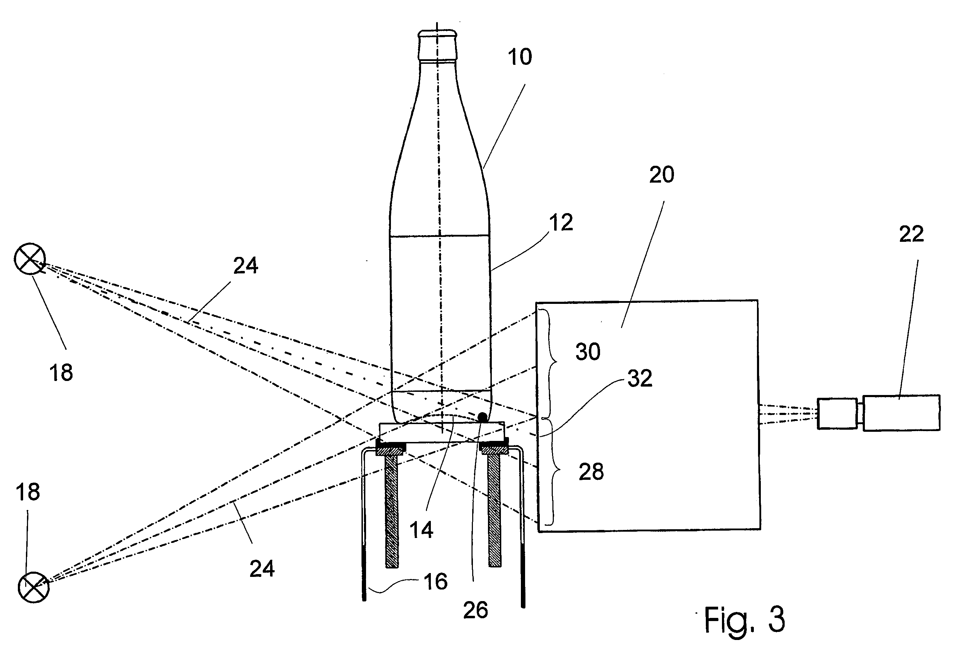

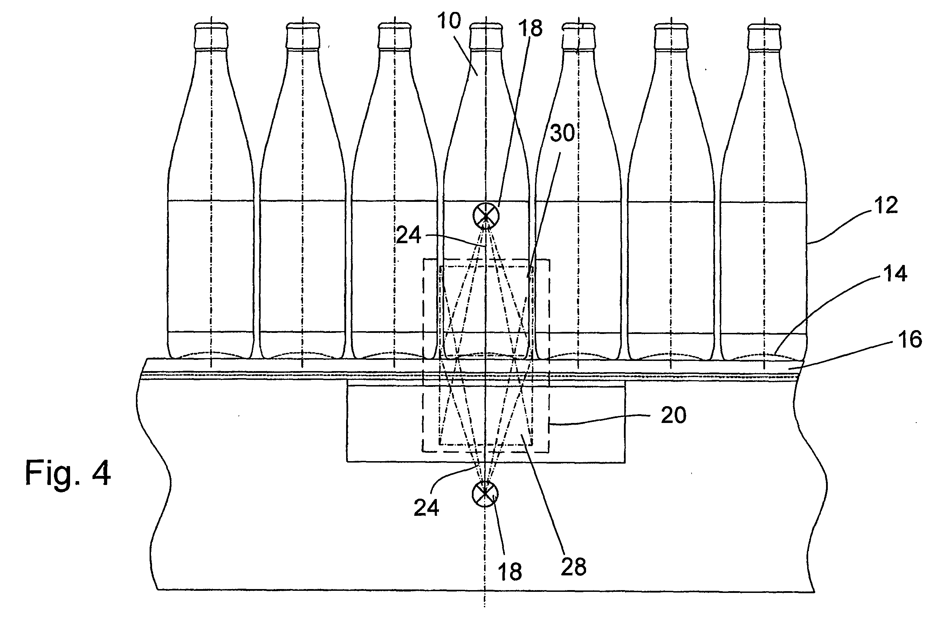

Bei dem Ausführungsbeispiel der Fig. 3 und 4 sind zwei Röntgenstrahlenquellen 18 vorgesehen, wobei der von der ersten Röntgenstrahlenquelle 18 emittierte Röntgenstrahl 24 unter einem Winkel von 30° von oben gegen die Transportebene gerichtet ist, während die zweite Röntgenstrahlenquelle 18 unterhalb der Transportebene angeordnet ist und der von ihr emittierte Röntgenstrahl 24 unter einem Winkel von 30° von unten gegen die Transportebene gerichtet ist. Der Abstand der Röntgenstrahlenquellen 18 von der Transporteinrichtung und die Divergenz der emittierten Röntgenstrahlen 24 sowie die Größe des Röntgenbildwandlers 20 und sein Abstand von der Transporteinrichtung 16 sind dabei so gewählt, dass das von dem ersten Röntgenstrahl 24 erzeugte Bild sich in der unteren Hälfte des Röntgenbildwandlers 20 befindet und das von dem zweiten Röntgenstrahl 24 erzeugte Bild 30 in der oberen Hälfte des Röntgenbildwandlers 20. Der Fremdkörper 26 ist wiederum so wie in Fig. 1 und 2 angeordnet und er erzeugt einen Fleck 32 verringerter Helligkeit sowohl im ersten Bild 28 als auch im zweiten Bild 30. Beide Bilder werden mittels einer einzigen CCD-Kamera 22 aufgenommen. Mit üblichen Bildverarbeitungsverfahren kann aus der Position der beiden Flecken 32 die genaue räumliche Position des Fremdkörpers 26 ermittelt werden. Liegt diese Position auf der Außenseite der Wand 12 der Flasche 10, so kann daraus geschlossen werden, dass es sich nicht um einen Fremdkörper 26 innerhalb der Flasche 10 handelt, sondern beispielsweise um eine Erhebung auf der Außenseite der Wand 12. Die Flasche 10 ist dann nicht fehlerhaft.

Die Verhältnisse bezüglich des Verlaufs der Röntgenstrahlen 24 zur Wölbung des Flaschenbodens 14 und zu den Behälterwänden 12 sind bei den Ausführungsbeispielen der Fig. 1 und 2 vertauscht, wenn sich der Fremdkörper 16 nicht auf der von den Röntgenstrahlenquellen 18 abgewandten Seite des Flaschenbodens 14 sondern auf der ihnen zugewandten Seite des Flaschenbodens 14 befindet.

Was die Erkennungsgenauigkeit und die Kontrastschärfe des von dem Fremdkörper 26 verursachten Flecken 32 verringerter Intensität auf dem Röntgenbildwandler 20 betrifft, so liegen für das erste Bild 28 die gleichen Verhältnisse vor wie bei dem Ausführungsbeispiel von Fig. 1 und bei dem zweiten Bild 30 die gleichen Verhältnisse wie bei dem Ausführungsbeispiel von Fig. 2. Die Verhältnisse sind dabei wieder vertauscht, wenn sich der Fremdkörper 26 auf der den Röntgenstrahlenquellen 18 zugewandten Seite des Flaschenbodens 14 befindet.

### Bezugszeichenliste

- 10: Flasche
- 12: Wand
- 14: Flaschenboden
- 16: Transporteinrichtung
- 18: Röntgenstrahlenquelle
- 20: Röntgenbildwandler
- 22: CCD-Kamera
- 24: Röntgenstrahl
- 26: Fremdkörper
- 28: erstes Bild
- 30: zweites Bild
- 32: Fleck

## Patentansprüche

1. Vorrichtung zur Untersuchung von gefüllten Behältern (10) auf Fremdkörper (26), wie Glassplitter, mit einer Transporteinrichtung (16) zum Transport der Behälter (10) einzeln aufeinander folgend in einer Reihe auf einer horizontalen Transportebene, mit einer ersten und einer zweiten Röntgenstrahlenquelle (18) zur Aussendung von Röntgenstrahlen (24) in einer vorgegebenen Richtung und mit einer Einrichtung (20, 22) zur Erfassung der Röntgenstrahlen (24) nach dem Durchgang durch die Behälter (10), wobei die Richtung, in der die Röntgenstrahlen (24) von den Röntgenstrahlenquellen (18) ausgesandt werden, zwischen 10° und 60° zur Transportebene geneigt ist und die erste Röntgenstrahlenquelle (18) oberhalb der Transportebene angeordnet ist und deren Röntgenstrahlen (24) von oben gegen die Transportebene gerichtet sind **dadurch gekennzeichnet,**
- **dass** die zweite Röntgenstrahlenquelle (18) unter der Transportebene angeordnet ist und deren Röntgenstrahlen (24) von unten gegen die Transportebene gerichtet sind.

2. Vorrichtung nach Anspruch 1, wobei jeder Röntgenstrahlenquelle (18) eine Einrichtung (20, 22) zur Erfassung der Röntgenstrahlen (24) nach dem Durchgang durch die Behälter (10) zugeordnet ist und die von den Erfassungseinrichtungen (20, 22) erfassten Röntgenstrahlen in einer Auswertungseinrichtung miteinander verglichen werden.

3. Vorrichtung nach Anspruch 2, wobei die Anordnung so getroffen ist, dass die Strahlen der beiden Röntgenstrahlenquellen (18) auf voneinander getrennte Bereiche der Einrichtung (20) zur Erfassung der Röntgenstrahlen (24) fallen.

4. Vorrichtung nach einem der Ansprüche 1 bis 3, wobei die beiden Röntegenstrahlenquellen (18) auf der selben Seite der Transporteinrichtung (16) angeordnet sind.

5. Vorrichtung nach einem der Ansprüche 1 bis 4, wobei die Röntgenstrahlen (24) etwa rechtwinklig zu der Transportrichtung ausgerichtet sind.

6. Vorrichtung nach einem der Ansprüche 1 bis 5, wobei die Einrichtung zur Erfassung der Röntgenstrahlen (24) ein Röntgenbildwandler (20) mit nachgeschalteter CCD-Kamera (22) ist.

7. Verwendung der Vorrichtung nach einem der Ansprüche 1 bis 6 zur Untersuchung von gefüllten Behältern (10) auf Fremdkörper.

8. Verwendung nach Anspruch 7, wobei die Röntgenstrahlenquellen (18) so positioniert sind, dass der Strahlenverlauf etwa tangential zur maximalen Neigung der Wölbung des Behälterbodens ist.

## Claims

1. Device for examining filled containers (10) for foreign bodies (26), such as glass splinters, comprising a transport apparatus (16) for transporting the containers (10) individually in succession in a row on a plane of transport, a first and a second X-ray source (18) for emitting an X-ray (24) in a predetermined direction and an apparatus (20, 22) for recording the X-rays (24) after they have passed through the containers (10), wherein the direction in which the X-rays (24) are emitted from the X-ray source (18) is inclined by between 10° and 60° to the plane of transport and the first X-ray source (18) is arranged above the plane of transport and its X-rays (24) are directed from above towards the plane of transport the
**characterized in that**
- the second X-ray source (18) is arranged below the plane of transport and its X-rays (24) are directed from below towards the plane of transport.

2. Device according to claim 1, wherein an apparatus (20, 22) for recording the X-rays (24) after their passage through the containers (10) is allocated to each X-ray source (18) and the X-rays recorded by the recording apparatuses (20, 22) being compared with one another in an evaluation apparatus.

3. Device according to claim 2, wherein the arrangement is such that the rays of the two X-ray sources (18) fall onto areas separate from each other of the apparatus (20) for recording the X-rays (24).

4. Device according to any one of claims 1 to 3, wherein both X-ray sources are arranged on the same side of the transport apparatus (16).

5. Device according to any one of claims 1 to 4, wherein the X-rays (24) are aligned roughly at a right angle to the direction of transport.

6. Device according to any one of claims 1 to 5, wherein the apparatus for recording the X-rays (24) being an X-ray image converter (20) with downstream CCD camera (22).

7. Use of the device according to one of claims 1 to 6 for examining filled containers (10) for foreign bodies.

8. Use according to claim 7, wherein the X-ray sources (18) are positioned such that the ray course is approximately tangential to the maximum slope of the bulge of the container bottom.

## Revendications

1. Système pour inspecter dans des contenants pleins (10) la présence de corps étrangers (26) comme des éclats de verre, avec un dispositif de transport (16) destiné au transport des contenants (10) se suivant les uns les autres individuellement dans une rangée sur un plan de transport horizontal, avec une première et une deuxième source de rayons X (18) pour émettre des rayons X (24) dans une direction déterminée et avec un dispositif (20, 22) pour détecter les rayons X après la traversée des contenants (10), sachant que la direction, dans laquelle les rayons X (24) sont émis par les sources de rayons X (18), est disposée au-dessus du plan de transport et dont les rayons X (24) sont dirigés depuis le dessus contre le plan de transport, **caractérisé en ce que** la deuxième source de rayons X (18) est disposée en dessous du plan de transport et dont les rayons X (24) sont dirigés depuis le dessous contre le plan de transport.

2. Système selon la revendication 1, dans lequel à chaque source de rayons X (18) est ajouté un dispositif (20, 22) pour la détection des rayons X (24) après la traversée des contenants (10) et les rayons X détectés par les dispositifs de détection (20, 22) sont comparés les uns aux autres dans un dispositif d'analyse.

3. Système selon la revendication 2, dans lequel l'agencement est concerné de telle manière que les rayons des deux sources de rayons X (18) tombent sur des zones du dispositif (20) séparées les unes des autres pour la détection des rayons X (24).

4. Système selon l'une quelconque des revendications 1 à 3, dans lequel les deux sources de rayons X (18) sont disposées du même côté du dispositif de transport (16).

5. Système selon l'une quelconque des revendications 1 à 4, dans lequel les rayons X (24) sont orientés à peu près à angle droit vers le dispositif de transport.

6. Système selon l'une quelconque des revendications 1 à 5, dans lequel le dispositif de détection des rayons X (24) est un convertisseur radiographique (20) avec une caméra numérique intercalée.

7. Utilisation du système selon l'une quelconque des revendications 1 à 6 pour inspecter dans des contenants pleins (10) la présence de corps étrangers.

8. Utilisation selon la revendication 7, sachant que les sources de rayons X (18) sont positionnées de telle manière que l'incidence des rayons soit à peu près tangentielle à l'inclinaison maximale de la courbure du fond du réservoir.
